# EUROPÄISCHE PATENTSCHRIFT

(11) **EP 2 486 073 B1**
(45) Veröffentlichungstag und Bekanntmachung des Hinweises auf die Patenterteilung: **13.08.2014**
(21) Anmeldenummer: 10750115.7
(22) Anmeldetag: 02.09.2010
(51) Int. Cl.: C08G 18/10

(54) **VERFAHREN ZUM VERKLEBEN VON FOLIENFÖRMIGEN SUBSTRATEN**
METHOD FOR GLUING FILM-LIKE SUBSTRATES
PROCÉDÉ POUR COLLER DES SUBSTRATS DE TYPE FEUILLES

(30) Priorität: 08.10.2009 DE 102009045488
(43) Veröffentlichungstag der Anmeldung: 15.08.2012
(73) Patentinhaber: Henkel AG & Co. KGaA, 40589 Düsseldorf (DE)
(72) Erfinder: KINZELMANN, Hans-Georg, 50259 Pulheim (DE); RYJKINA, Ekaterina, 40597 Düsseldorf (DE); KOSTKA, Thomas, 52445 Titz (DE); LOSCHEN, Christoph, 40699 Erkrath (DE); HÖLTGEN, Michael, 40591 Düsseldorf (DE)
(86) Internationale Anmeldenummer: PCT/EP2010/062898
(87) Internationale Veröffentlichungsnummer: WO 2011/042267

(56) Entgegenhaltungen:
- EP-A1- 0 340 586
- EP-A1- 0 384 404

## Beschreibung

Die Erfindung betrifft ein Verfahren zum Verkleben von folienförmigen Substraten zu Mehrschichtfolien, wobei verbesserte 2-Komponenten Polyurethan-Kaschierklebstoffe eingesetzt werden.

Mehrschichtfolien sind in der Verpackungsindustrie allgemein bekannt. Diese können aus zwei- und mehr Schichten aufgebaut sein, wobei die einzelnen Schichten jeweils als Folie miteinander verklebt werden. Diese Folien können aus Polymeren, wie Polyethylen, Polypropylen, Polyamid oder Polyester bestehen, es können auch Papierschichten enthalten sein sowie Metallfolien. Weiterhin können auch metallisierte Oberflächen eingesetzt werden. Klebstoffe für diese Verklebung sind in weiten Anwendungsbereichen bekannt. Es kann sich um wasserbasierte Klebstoffe handeln, es kann sich um Schmelzklebstoffe handeln, weiterhin sind 1-Komponenten oder 2-Komponenten vernetzende Systeme bekannt.

US 5891960 beschreibt lösemittelhaltige vernetzbare Zusammensetzungen, als Beschichtungsmittel. Dabei soll diese Zusammensetzung aus einem Polymergerüst bestehen, das Epoxygruppen aufweist, wobei an diese Gruppen Zitronensäure anreagiert wird unter Bildung eines carboxylgruppenhaltigen Polymers. Dieses COOH-gruppenhaltige Polymer wird dann mit Isocyanaten zu der Beschichtung vernetzt.

Weiterhin ist die GB 2,222,592 bekannt. Diese beschreibt ein Verfahren zum Beschichten einer Metalloberfläche, als Beispiel Stahl, mit Polyhydroxyarylverbindungen in wässriger Lösung und anschließend mit einer vernetzbaren Epoxyverbindung. Diese epoxidvernetzende Zusammensetzung kann aromatische Phenole, Carbonsäureestergruppen oder Carbonamidgruppen aufweisen. Polyurethansysteme enthaltend solch Polyhydroxyaryle sind nicht beschrieben.

Die WO 2007/008199 beschreibt eine wässrige Primerzusammensetzung, die ein vernetzendes System und einen Korrosionsinhibitor aufweist. Als Korrosionsinhibitoren werden verschiedene Metallionen und Komplexmittel beschrieben.

Die EP 0 384 404 A1 beschreibt ein Polyisocyanat-Haftmittel für Filme für Schichtstoffe. Durch die Zugabe einer geringen Menge einer aliphatischen Hydroxycarbonsäure in ein Polyisocyanat-Polymer wird ein Klebstoff erzeugt, der die Haftung zwischen zwei Schichtstoffen verbessert, auch nach dem Einfluss von Wasser bei hoher Temperatur (Sterilisation). Bei dem offenbarten Haftmittel handelt es sich um ein NCO-terminiertes Prepolymer (d.h. ein 1-Komponenten-Polyurethanklebstoff).

Die EP 0 340 586 A1 offenbart ein Verfahren zum Verkleben von folienförmigen Substraten, wobei auf eine Folie ein 2-Komponenten-Polyurethanklebstoff aufgebracht wird. Der 2-Komponenten-Polyurethanklebstoff ist aus einer Hydroxylgruppen enthaltenden Komponente A und einer Isocyanatgruppen enthaltenden Komponente B aufgebaut. Die Komponente A enthält keine niedermolekulare Verbindung mit einem Molekulargewicht von unter 500 g/mol in Mengen von 0,05 bis 5 Gew.-%, welche eine nucleophile Gruppe aufweist, die mit NCO-Gruppen reaktiv ist, und eine H-Brücken bildende Gruppe enthält, ausgewählt aus O=C-O⁻ oder O=C -C-O⁻ oder O=C- C =C-O⁻ oder protonierten Formen.

Der Stand der Technik beschreibt Klebstoffe und Überzugsmittel für Metalloberflächen. Diese sollen verschiedene Substanzen, unter anderem auch Phenolderivate, enthalten, es werden auch verschiedene vernetzbare Systeme beschrieben. Dabei besteht für einen Verbund aus Metalloberflächen und Kunststofffolien häufig das Problem, dass keine ausreichende Haftung zu der Metalloberfläche erzeugt wird. Damit eine ausreichende Flexibilität erhalten wird, soll der Klebstoff seine Eigenschaften in dünner Schicht ausbilden. Ein weiteres Problem ist auch ein Nachlassen der an Haftung, das durch Hitze- oder Feuchtigkeitseinwirkung auftritt. Weiterhin soll diese Haftung schnell erzeugt werden, damit solche Verbundmaterialien möglichst rasch weiterverarbeitet werden können. Der Klebstoff muss anwendungstechnische Eigenschaften zeigen, die einen Auftrag in dünner Schicht zulassen und eine gleichmäßige störungsfreie Klebstoffschicht ergeben.

Aus dem Stand der Technik ergibt sich die Aufgabe, dass ein Verfahren zum Verkleben von Folien bereit gestellt werden soll, das eine Klebstoffschicht mit einer guten Haftung zwischen Kunststoff und Metalloberfläche erzeugt, der einen schnellen Haftungsaufbau zwischen den beiden Substraten ermöglichst und der eine dauerhafte Verbindung zu einer Mehrschichtfolie ergibt. Weiterhin soll eine niedrige Applikationsviskosität erhalten werden. Außerdem soll eine verbesserte Verklebungsstabilität des Verbundes erhalten werden.

Die Aufgabe wird gelöst durch einen ein Verfahren zum Verkleben von folienförmigen Substraten, wobei auf eine Folie ein 2-Komponenten Polyurethan- Klebstoff aufgebracht wird, danach eine zweite Folie unter Druck aufgebracht wird, wobei ein 2K-PU-Klebstoff eingesetzt wird bestehend aus einer Komponente A enthaltend mindestens ein Prepolymer mit mindestens zwei NCO-Gruppen, einer Komponente B enthaltend mindestens einen polymeren oder oligomeren Vernetzer, der mindestens zwei mit NCO-Gruppen reaktive Gruppen aufweist, dadurch gekennzeichnet, dass die Komponente B 0,05 bis 5 Gew-%, bezogen auf den gesamten Klebstoff, einer niedermolekularen Verbindung C mit einem Molekulargewicht von unter 500g/mol enthält, wobei diese eine nucleophile Gruppe aufweisen soll, die mit NCO-Gruppen reaktiv ist und eine H-Brücken bildende Gruppe enthält, ausgewählt aus
O=C - O⁻ oder O=C -C- O⁻ oder O=C- C = C - O⁻ oder protonierten Formen.

Die Erfindung betrifft weiterhin eine Mehrschichtfolie, die mindestens eine Metallschicht innerhalb der Folie aufweist, die mit einem entsprechenden 2K-PU-Klebstoff durch das erfindungsgemäße Verfahren verklebt wurde.

Verfahren zum Kaschieren von Folien sind bekannt. Dabei können verschiedene Klebstoffe eingesetzt werden. Gemäß der vorliegenden Erfindung werden speziell modifizierte 2K-PU Kaschierklebstoffe eingesetzt, die gut zu verarbeiten sind und eine verbesserte Verbundhaftung der verklebten Substrate ergeben. Als Substrate im erfindungsgemäßen Verfahren können die bekannten flexiblen folienförmigen Substrate eingesetzt werde, wie Kunststofffolien, Metallfolien, Papierfolien oder Karton. Diese werden in zwei oder mehreren Schichten zu Mehrschichtfolien verklebt.

Als Folienmaterialien zum Herstellen solcher Mehrschichtfolien nach dem erfindungsgemäßen Verfahren können die bekannten flexiblen Folien eingesetzt werden. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, natürliche Polymere, wie Cellophan oder Papier. Dabei könne die Folienmaterialen auch modifiziert sein, z.B. durch Modifizieren der Polymere mit funktionellen Gruppen, oder es können zusätzliche Komponenten, beispielsweise Pigmente, Farbstoffe, oder geschäumte Schichten in der Folie enthalten sein. Es kann sich um gefärbte, bedruckte, farblose oder transparente Folien handeln.

Aus den entsprechenden flexiblen Folienmaterialien zusammen mit den geeigneten 2K-PU-Klebstoffen können Mehrschichtfolien hergestellt werden. Insbesondere ist der Klebstoff zur Verklebung von Folienmaterialien geeignet, die eine Metalloberfläche aufweisen, insbesondere eine Aluminiumoberfläche. Dabei kann diese auch teilweise oder vollständig oxidiert sein. Deswegen wird gemäß einer bevorzugten Ausführungsform der 2K-PU-Klebstoff auf eine Metallfolie, insbesondere eine Aluminiumfolie, aufgetragen oder auf eine Kunststofffolie, die eine Aluminiumbeschichtete Oberfläche aufweist.

Das Auftragen des Klebstoffs auf die Folien kann mit bekannten Vorrichtungen geschehen. Diese sind dem Fachmann bekannt, es kann sich dabei um Sprühauftrag, Rakelauftrag, Druckauftrag und Walzenauftrag handeln.

Ein erfindungsgemäß geeigneter Klebstoff ist ein 2-Komponenten Klebstoff, der als eine Komponente NCO-Gruppen-haltige Prepolymere enthält und als zweite Komponente mindestens einen Vernetzer enhält, der mindestens zwei mit NCO-Gruppe reagierende funktionelle Gruppen aufweist, zusammen mit weiteren Zusatzstoffen. Zusätzlich ist in der Vernetzerkomponente die erfindungsgemäß notwendige niedermolekulare Verbindung C enthalten.

Als Komponente A wird ein mindestens zwei Isocyanatgruppen tragendes Polyurethan-Prepolymer oder ein Gemisch solcher PU-Prepolymere eingesetzt, das beispielsweise durch Umsetzung einer Polyolkomponente mit einem mindestens difunktionellen Isocyanat im stöchiometrischen Überschuss erhältlich ist.

PU-Prepolymere im Sinne der vorliegenden Erfindung sind Umsetzungsprodukte von OH-Gruppen oder NH-Gruppen-tragenden Verbindungen mit einem Überschuss von Polyisocyanaten. Die bei der Synthese der PU-Prepolymere einsetzbare Polymere und Polyisocyanate sind dem Fachmann bekannt. Es handelt sich dabei um die für Klebstoffanwendung bekannten Polyole oder entsprechende Verbindungen mit sekundären und/oder primären Aminogruppen. Es sind OH-Gruppen-haltige Ausgangsverbindungen bevorzugt. Insbesondere geeignet zur Synthese dieser Prepolymere sind Polyole mit einem Molekulargewicht bis zu 20000 g/mol, insbesondere von 100 bis zu 10000 g/mol (zahlenmittleres Molekulargewicht, M_{N}, wie durch GPC bestimmbar). Es kann sich dabei beispielsweise um Polyole auf Basis von Polyethern, Polyestern, Polyolefinen, Polyacrylaten, Alkylenpolyolen handeln, oder als andere Ausführungsform analoge Verbindungen mit NH-Gruppen.

Eine Ausführungsform setzt bevorzugt niedermolekulare nicht-verzweigte Polyole ein, die ein Molekulargewicht von unterhalb von 1500 g/mol aufweisen, wobei diese Polyole 3 oder bevorzugt 2 OH- aufweisen sollen. Es können einzelne Polyole ausgewählt werden, es können jedoch auch Mischungen der Polyole eingesetzt werden. Insbesondere bevorzugt werden Diole ausgewählt, insbesondere solche die endständig OH-Gruppen aufweisen.Eine andere Ausführungsform setzt OH-haltige Polymere mit einem Molekulargewicht von 1500 bis 20000 g/mol ein. Dabei können eine Vielzahl von OH-Gruppen enthalten sein oder auch nur 2 OH-Gruppen.

Die Polyolkomponente kann dabei niedermolekular sein, beispielweise von ca. 60 g/mol bis 1500 g/mol, es können jedoch auch höher molekulare Polymere umgesetzt werden, beispielsweise solche mit einem Molekulargewicht von 1500 bis 20.000 g/mol. Dabei sollen im Durchschnitt zwei reaktive Gruppen am Polyol vorhanden sein, beispielsweise Diole, es ist auch möglich, Verbindungen mit mehreren funktionellen Gruppen umzusetzen.

Als Polyisocyanate können bei der Prepolymersynthese die an sich bekannten Polyisocyanate mit zwei oder mehr Isocyanat-Gruppen eingesetzt werden. Geeignete Polyisocyanate sind ausgewählt aus der Gruppe 1,5-Naphthylendiisocyanat, 2,4-oder 4,4'-Diphenylmethandiisocyanat (MDI), hydriertes MDI (H12MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato2,2,4-trimethylhexan, 1,6-Diisocyanato-2,4,4-trimethylhexan, 1-Isocyanatomethyl-3isocyanato-1,5,5-trimethylcyclohexan (IPDI), phosphor- oder halogenhaltige Diisocyanate, Tetramethoxybutan-1,4-diisocyanat, Naphthalin-1,5-diisocyanat (NDI), Butan-1,4-diisocyanat, Hexan-1,6-diisocyanat (HDI), Dicyclohexylmethandiisocyanat, Cyclohexan-1,4-diisocyanat, Ethylen-diisocyanat, Methylentriphenyltriisocyanat (MIT), Phthalsäure-bis-isocyanato-ethylester, Trimethylhexamethylendiisocyanat, 1,4-Diisocyanatobutan, 1,12-Diisocyanatododecan, Dimerfettsäurediisocyanat und Lysinesterdiisocyanat. Es können auch mindestens trifunktionelle Isocyanate eingesetzt werden, wie durch Trimerisation oder Oligomerisation von Diisocyanaten oder durch Reaktion von Di-isocyanaten mit polyfunktionellen hydroxyl- oder aminogruppenhaltigen Verbindungen entstehen. Bevorzugt werden meist Diisocyanate eingesetzt.

Durch die Menge der Isocyanate kann die Reaktionsführung beeinflusst werden. Wird ein hoher Überschuss an Isocyanaten eingesetzt, entstehen PU-Prepolymere, bei denen die OH-Gruppen in Isocyanatgruppen funktionalisiert worden sind. Dabei wird nur ein geringer Molekulargewichtsaufbau festgestellt. Werden geringere Mengen an Isocyanaten eingesetzt oder wird die Reaktion stufenweise durchgeführt, ist es bekannt, dass das Molekulargewicht der Prepolymere im Vergleich zu den Ausgangsverbindungen erhöht wird. Insgesamt muss in diesem Falle sichergestellt sein, dass ein Überschuss an Isocyanat bezogen auf die Gesamtreaktion eingesetzt wird.

Ebenso sind PU-Prepolymere bekannt, die aus Mischungen von Isocyanaten hergestellt wurden. Dabei können solche Prepolymere Isocyanatgruppen unterschiedlicher Reaktivität aufweisen.

Die Umsetzung der Polyolverbindung mit den Isocyanaten kann auf bekannte Art und Weise erfolgen. Dabei ist es möglich, dass in Lösemitteln gearbeitet wird, es können jedoch auch die Ausgangsverbindungen ohne Lösemittel miteinander umgesetzt werden. Weiterhin ist es möglich, dass mit einem Überschuss an Isocyanaten gearbeitet wird, wobei nicht abreagierte monomere Isocyanate in der Reaktionsmischung vorhanden sind. Eine andere Arbeitsweise stellt durch die Art der Reaktionsführung sicher, dass nur geringe Anteile von monomeren, nicht umgesetzten Isocyanaten in der Mischung vorhanden sind. Eine weitere Arbeitsweise destilliert nicht reagierte Diisocyanate ab, so dass besonders monomerarme Produkte hergestellt werden können.
Für die Erfindung können die bekannten PU-Prepolymere mit reaktiven NCO-Gruppen eingesetzt werden. Solche sind dem Fachmann bekannt und können auch kommerziell erhalten werden. Insbesondere bevorzugt sind im Rahmen dieser Erfindung PU-Prepolymere, die auf Basis von Polyesterpolyolen oder Polyetherpolyolen durch Umsetzung mit Diisocyanaten hergestellt worden sind. In der Regel weisen die im Rahmen der vorliegenden Erfindung eingesetzten PU-Prepolymeren ein Molekulargewicht von 500 bis etwa 30.000 g/mol auf, bevorzugt bis 15.000 g/mol, insbesondere von 1000 bis 5.000 g/mol.

Das erfindungsgemäß geeignete PU-Prepolymere mit reaktiven NCO-Gruppen kann in einer Ausführungsform gegebenenfalls in der Komponente A noch zusätzlich Polyisocyanate enthalten. Es kann sich dabei um aliphatische, aromatische oder polymere Isocyanate handeln. Beispiele dafür sind die bekannten Klebstoffpolyisocyanate, wie MDI, TDI, HDI, IPDI, XDI, TMXDI, NDI, pMDI oder entsprechende Carbodiimide, Isocyanurate oder Biurete. Diese können bei der Herstellungsreaktion der Prepolymere zugesetzt werden, sie können aber auch später der Komponente A zugesetzt werden. Insbesondere solche Polyisocyanate sind geeignet, die nur einen niedrigen Dampfdruck aufweisen, beispielsweise unter 0,01 mbar bei 25°C.

Zusätzlich zu den geeigneten PU-Prepolymeren kann die Komponente A noch weitere Hilfsstoffe und Additive enthalten. Es ist darauf zu achten, dass hier nur solche Bestandteile zugesetzt werden, die nicht mit den Isocyanatgruppen reagieren können.

Die Komponente B des erfindungsgemäßen 2-K PU-Klebstoffs muss mindestens eine Verbindung enthalten, die mindestens zwei gegenüber Isocyanatgruppen reaktive Gruppen aufweist. Beispielsweise kann es sich dabei um SH-, COOH-, NH- oder OH-Gruppen handeln, insbesondere sind Polyole bevorzugt, wobei es sich auch um Mischungen von Polyolen unterschiedlicher chemischer Struktur oder unterschiedlichen Molekulargewichts handeln kann. Diese Verbindungen wirken als Vernetzer.

Als Polyolkomponente zum Einsatz in der Komponente B eine Vielzahl von Polyolen geeignet. Es kann sich beispielsweise um solche mit zwei bis zu 10 OH-Gruppen pro Molekül handeln. Es können aliphatische Verbindungen sein, es kann sich um aromatische Verbindungen handeln, es können auch Polymere eingesetzt werden, die eine ausreichende Anzahl von OH-Gruppen tragen. Es kann sich um primäre oder sekundäre OH-Gruppen handeln, soweit eine ausreichende Reaktivität mit den Isocyanatengruppen gegeben ist.

Beispiele für solche Polyole sind niedermolekulare aliphatische Polyole mit bevorzugt zwei bis zehn OH-Gruppen, insbesondere C₂ bis C₃₆-Akohole. Beispiele dafür sind Ethlyenglykol, Propylenglykol, Butandiol-14, Hexandiol-16, Oktandiol-18, Dimerfettsäurediole, Diethylenglykkol, Triethylenglykol, Dipropylenglykol, Glycerin, Trimethylolpropan, Pentaerythrit oder Zuckeralkohole.

Eine andere Gruppe von geeigneten vernetzenden Polyolen sind Polyole mit aromatischen Kernen. Beispielsweise kann es sich um Derivate von Resorcin, Pyrogallol, Hydrochinon oder anderen aromatischen Polyolen handeln.

Eine andere Gruppe geeigneter Polyole sind beispielsweise Polyether. Es handelt sich dabei um die Umsetzungsprodukte von Alkylenoxiden mit 2 bis 4 C-Atomen mit niedermolekularen Alkoholen. Beispiele für solche Verbindungen sind Polypropylenglykol, Polyethylenglykol, Poly-THF. Dabei sollen die Polyetherpolyole ein Molekulargewicht von 200 bis 10.000 g/mol aufweisen, insbesondere 400 bis 5000 g/mol.

Eine weitere geeignete Gruppe von Polyolverbindungen zur Verwendung in der Komponente B sind Polyesterpolyole. Es können die für Klebstoffe bekannten Polyesterpolyole eingesetzt werden. Beispielsweise handelt es sich um die Umsetzungsprodukte von Diolen, insbesondere niedermolekularen Alkylendiolen oder Polyetherdiolen mit Dicarbonsäuren. Es kann sich dabei um aliphatische, aromatische Carbonsäuren oder Gemische davon handeln. Gegebenenfalls können auch Ester dieser Carbonsäuren oder Anhydride umgesetzt werden.

Dem Fachmann sind solche Polyesterpolyole in vielen Ausgestaltungen bekannt und kommerziell verfügbar. Insbesondere sollen diese Polyesterpolyole ein Molekulargewicht von ca. 200 bis etwa 20.000 g/mol aufweisen, insbesondere von 400 bis 5.000 g/mol.

Eine weitere Gruppe von geeigneten Polyolverbindungen sind polymere Lactone oder Polyacetale, soweit diese mindestens zwei funktionelle Gruppen aufweisen und ein entsprechendes geeignetes Molekulargewicht.

Eine weitere Gruppen von geeigneten Polyolverbindungen sind OH-funktionelle Poly(meth)acrylate. Solche Poly(meth)acrylate sind beispielsweise erhältlich durch Polymerisation von ethylenisch ungesättigten Monomeren, wobei eine Anzahl der monomeren zusätzlich eine OH-Gruppe tragen. Das Molekulargewicht solcher Polyacrylate kann beispielsweise von 500 bis 20.000 betragen, insbesondere weniger als 5000 g/mol.

Eine weitere Gruppe von Polyolen sind OH-Gruppen-haltige Polyurethane. Dabei können die bekannte Polyurethane als Reaktionsprodukt aus Polyolen und Isoyanatenen eingesetzt werden. In diesem Falle wird das Mengenverhältnis der Bestandteile so gewählt, dass OH-Gruppen-haltige Polyurethane erhalten werden. Das Molekulargewicht solcher Polyurethane kann von 500 bis 10.000 g/mol betragen, insbesondere bis 5000 g/mol.

Die geeigneten Vernetzer, die mindestens zwei reaktive Gruppen aufweisen, können einzeln oder im Gemisch eingesetzt werden. Dabei ist darauf zu achten, dass die Verbindungen miteinander mischbar sind und keine Phasentrennung auftritt. Über die Auswahl der Bestandteile der Komponente B kann die Viskosität beeinflusst werden. Werden polymere Polyole eingesetzt, zeigt B eine höhere Viskosität. Bei Verwendung von Anteilen von niedermolekularen Polyolen, beilspielsweise Polyalkylenpolyolen mit bis zu 12 C-Atomen, wird die Viskosität niedriger sein. Erfindungsgemäß ist es zweckmäßig, wenn die Komponente B flüssig ist. Das kann durch die Auswahl der Polyole erfolgen, in einer anderen Ausführungsform ist sie jedoch möglich, dass inerte organische Lösemittel zugesetzt werden.

Für ein erfindungsgemäßes Ergebnis der Verklebung ist es notwendig, dass in der Komponente B mindestens eine niedermolekulare Verbindung C enthalten ist, die eine nucleophile Gruppe aufweisen soll, die mit NCO-Gruppen reaktiv ist, und zusätzlich mindestens eine H-Brücken-bildende Gruppe enthält. Als niedermolekulare Verbindung C sollen Verbindungen verstanden werden, die ein Molekulargewicht unter 500 g/mol aufweisen, insbesondere unter 400 g/mol.

Als nucleophile Gruppe der Verbindung C können beispielsweise OH, NHR, SH, COOH enthalten werden. Besonders bevorzugt ist die OH-Gruppe.

Als H-Brückenbildende Gruppe sind solche Gruppen enthalten, die an einem C-Atom oder zwei benachbarten C-Atomen Carbonylgruppen und/oder Hydroxygruppen aufweisen. Insbesondere sind Verbindungen geeignet, die die Strukturen 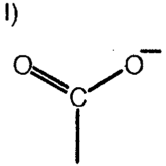 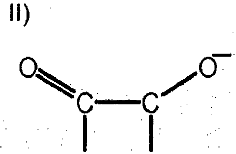 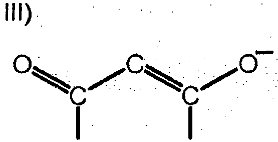 aufweisen oder die entsprechenden protonierten Formen.
Es hat sich gezeigt, dass diese chemischen Gruppen eine gute Haftung auf Metallsubstraten oder den oxidierten Oberflächen, insbesondere auf Aluminiumsubstraten herstellen. Dabei sind eine Vielzahl von Verbindungen geeignet, die entsprechende Funktionalitäten besitzen. Eine Auswahl von besonders geeigneten Verbindungen kann beispielsweise durch eine quantenchemische Berechnung der Abstände der jeweiligen O-Gruppen ausgewählt werden. Es hat sich gezeigt, dass insbesondere ein Abstand zwischen den O-Atomen zwischen 2,5 und 3,5 Å geeignet ist.

Die Verbindungen C können verschiedene Strukturen aufweisen. Beispielsweise kann es sich um aliphatische oder cycloaliphatische Verbindungen handeln, es können auch aromatische Verbindungen mit einem oder mehreren Phenylkernen eingesetzt werden. Die Verbindungen werden so ausgewählt, dass es sich um bei Raumtemperatur feste Verbindungen handelt. Beispiele für aliphatische Verbindungen sind Di- oder Tri-Carbonsäuren mit 4 bis 14 C-Atomen, die zusätzlich noch mindestens eine OH-Gruppe am Molekül aufweisen. Beispiele für cyclische Verbindungen sind substituierte Cyclohexane, die beispielsweise eine Carboxylgruppe und mindestens eine OH-Gruppe am Cyclohexanring aufweisen, es können α-Hydroxyketone, 1,3-Diketone oder 1,3-Esterketone enthalten sein. Beispiele für geeignete aromatische Verbindungen sind substituierte Phenole, die zusätzlich weitere Substituenten tragen, ausgewählt aus COOH, OH, NH₂. Eine weitere Gruppe von Verbindungen sind solche, die mehr als einen aromatischen Kern aufweisen, beispielsweise substituierte Naphthalincarbonsäuren oder substituierte Pyranderivate. Geeignete Verbindungen C weisen ein Molekulargewicht von unter 500 g/mol, insbesondere unter 400 g/mol auf.

Die geeigneten Substanzen müssen entweder eine Carboxylgruppe enthalten, eine Hydroxygruppe in α-Stellung zu einer Carbonylgruppe, oder eine Hydroxygruppe in β-Stellung zu einer Carbonylgruppe oder einer Carbonsäureestergruppe. Weiterhin muss zusätzlich eine reaktive OH-Gruppe enthalten sein, insbesondere eine phenolische OH-Gruppe.

Beispiele für solche Verbindungen, die für einen erfindungsgemäßen Klebstoff besonders geeignet sind, umfassen Morin (2-(2,4-Dihydroxyphenyl)-3,5,7-trihydroxy-4*H*-1-benzopyran-4-on), 3,7-Dihydroxy-2-Naphthoe-Säure (3,7-Dihydroxynaphthalin-2-carbonsäure), Pyrogallolcarbonsäure (2,3,4-Trihydroxybenzoesäure), 3,4-Dihydroxyphenylessigsäure, Gallussäure (3,4,5-Trihydroxybenzoesäure), p-Aminosalicylsäure (4-Amino-2-hydroxybenzoesäure), Pamoasäure (4,4'-Methylenbis(3-hydroxy-2-naphthoesäure), Zitronensäure (2-Hydroxy-1,2,3-propantricarbonsäure). Es kann eine dieser Verbindungen eingesetzt werden, aber es ist auch möglich, dass ein Gemisch eingesetzt wird. Eine bevorzugte Auswahl setzt solche Verbindungen ein, die als Klebstoff aufgetragen nur eine geringe oder keine Verfärbung des Klebstoffs ergeben. Das ist insbesondere bei Zitronensäure, Gallussäure oder p-Aminosalicylsäure der Fall.

Der 2K-PU-Klebstoff soll die Verbindung C in einer Menge von 0,05 bis 5 Gew.-% aufweisen, insbesondere von 0,1 bis 2 Gew.-%, bezogen auf den gesamten Klebstoff.

In diesen 2K-PU-Klebstoffen ist es zweckmäßig, dass zusätzliche Bestandteile enthalten sind, wie beispielsweise Lösemittel, Weichmacher, Katalysatoren, Harze, Stabilisatoren, Haftvermittler, Pigmente oder Füllstoffe.

In einer Ausführungsform enthält ein geeigneter Klebstoff mindestens ein klebrigmachendes Harz. Das Harz bewirkt eine zusätzliche Klebrigkeit. Es können grundsätzlich alle Harze eingesetzt werden, die verträglich sind, d.h. ein weitgehend homogenes Gemisch bilden. Es können beispielsweise aromatische, aliphatische oder cycloaliphatische Kohlenwasserstoff-Harze sein, sowie modifizierte oder hydrierte Versionen davon. Die Harze besitzen im Allgemeinen ein niedriges Molekulargewicht unter 1500 g/mol, insbesondere unter 1000 g/mol. Das Harz kann in einer Menge von 0 bis 50 Gew.-% eingesetzt werden, bevorzugt bis zu 30 Gew.-% bezogen auf den Klebstoff.

Weiterhin können auch Weichmacher enthalten sein, wie beispielsweise Weißöle, naphtenische Mineralöle, paraffinische Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate eingesetzt werden. Insbesondere sind solche Weichmacher geeignet, die lebensmittelrechtlich unbedenklich sind.

Als gegebenenfalls einsetzbare Stabilisatoren oder Antioxidantien sind sterisch gehinderte Phenole hohen Molekulargewichts, polyfunktionelle Phenole, schwefelund phosphorhaltige Phenole oder Amine geeignet.

Es ist möglich, dem Klebstoff zusätzlich Silanverbindungen als Haftvermittler zuzusetzen. Als Haftvermittler können die bekannten organofunktionelle Silane zugesetzt werden, wie (meth)acryloxyfunktionelle, epoxidfunktionelle, aminfunktionelle oder nicht reaktiv substituierte Silane eingesetzt werden. Beispiele dafür sind Vinyltrialkoxysilan, Alkyltrialkoxysilan, Tetraalkoxysilane, 3-Acryloxypropyl-trialkoxysilan, 3-Methacryloxypropyltrialkoxysilan, 3-Aminopropyltrimethoxysilan, 3-Aminopropyltriethoxysilan, 3-Aminopropylmethyldimethoxysilan, N-(2-Aminoethyl)-3-aminopropyltrimethoxysilan, 3-Glycidyloxymethyltrimethoxysilan, 3-Glycidyloxymethyltriethoxysilan, 2-Glycidyloxyethyltrimethoxysilan, oder entsprechende Dialkoxyderivate, wobei bevorzugt Butoxy-, Propoxy-, insbesondere Methoxy oder Ethoxy -Gruppen geeignet sind. In einer bevorzugten Ausführungsform werden dem Klebstoff 0,1 bis 5 Gew.-% solcher Silane zugesetzt. Es ist dabei je nach Auswahl des Silans zweckmäßig, dieses nur in einer Komponente zu mischen. Damit kann eine vorzeitige Reaktion und eine Verminderung der Lagerstabilität verhindert werden.

Als gegebenenfalls zusätzlich vorhandenes Additiv kann ein 2K-PU-Klebstoff auch Katalysatoren enthalten. Als Katalysatoren können alle bekannten Verbindungen eingesetzt werden, die die Reaktion von OH-Gruppe und NCO-Gruppe katalysieren können. Beispiele hierfür sind Titanate, wie Tetrabutyltitanat oder Titantetraacetylacetonat; Bismutverbindungen, wie Bismut-tris-2-ethylhexanoat; Zinncarboxylate, wie Dibutylzinndilaurat (DBTL), Dibutylzinndiacetat oder Dibutylzinndiethylhexanoat,; Zinnoxide wie Dibutylzinnoxid und Dioctylzinnoxid; Organoaluminumverbindungen wie Aluminumtrisacetylacetonat; Chelatverbindungen wie Zirconiumtetraacetylacetonat; tert. Aminverbindungen oder ihre Salze mit Carbonsäuren, wie Triethanolamin, Triethylenediamin, Guanidin, Morpholin, N-methylmorpholin und 1,8-Diazabicyclo-(5,4,0)-undecen-7 (DBU), Silanhaftvermittler mit Aminogruppen. Der Katalysator, wird in einer Menge von 0,01 bis etwa 5 Gew.-% bezogen auf das Gesamtgewicht des Klebstoffs eingesetzt, bevorzugt von 0,05 bis 1 Gew.-%, besonders bevorzugt mehr als 0,1 Gew.-% Katalysator.

Eine besondere Ausführungsform setzt zu den Beschichtungsmitteln noch Pigmente ein. Es handelt sich dabei um feinteilige Pigmente, beispielsweise mit einer Teilchengröße < 5 µm. Eine Ausführungsform der Erfindung arbeitet mit plättchenförmigen Pigmenten, die in einer Komponente des Bindemittels dispergiert werden können. Sie liegen danach in feinverteilter Form vor, d.h. die Pigmente oder Füllstoffe sind plättchenförmig dispergiert, weisen also nur eine geringe Dicke auf. Solche Pigmente sind dem Fachmann bekannt, beispielsweise Schichtsilikate verschiedener Zusammensetzung. Eine andere Arbeitsweise setzt Nanopartikel ein. Diese haben üblicherweise eine Teilchengröße < 500 nm, insbesondere kleiner als 100 nm. Bei solchen Nanopigmenten kann es sich beispielsweise um solche handeln, die auf Basis von TiO₂, SiO₂, Fe₂O₃ oder ähnliche Oxide oder Oxihydrate. Dem Fachmann sind solche Pigmente bekannt. Er kann sie nach üblichen Gesichtspunkten auswählen und mittels bekannter Verfahren in einem oder beiden Bindemittelkomponenten fein dispergieren.

Es ist möglich, dass die Klebstoffe auch Lösemittel enthalten. Es handelt sich dabei um die üblichen Lösemittel, die bei Temperaturen bis zu 120°C verdampfen können. Die Lösemittel können ausgewählt aus der Grupppe der aliphatischen Kohlenwasserstoffe, der aromatischen Kohlenwasserstoffe, Ketone, insbesondere C₁-C₄-Alkohole oder auch Wasser. In einer anderen Ausführungsform ist der 2K-Klebstoff lösemittelfrei.

Ein geeigneter 2K-PU-Klebstoff besteht aus einer Komponente A, die reaktive NCO-Gruppen enthält, einer Komponente B, die einer reaktive NH- oder insbesondere OH-Gruppen enthält, sowie in Komponente B einer Verbindung C. Zusätzlich können in den Komponenten A und B, 0 bis 30 % Additive und Hilfsstoffe enthalten sein, insbesondere 1 bis 15 Gew.-%. Dabei können die Additive prinzipiell in beiden Komponenten vorliegen. Es ist jedoch darauf zu achten, dass Additive, die mit NCO reaktive Gruppen aufweisen, bevorzugt in der OH-Komponente enthalten sein sollen. Anderenfalls ist die Lagerstabilität der Produkte vermindert.

Verfahren zum Herstellen der entsprechenden Komponenten sind dem Fachmann bekannt. Dabei werden die Ausgangsmaterialien gegebenenfalls einer Trocknung unterzogen und können dann auf bekannten Aggregaten gemischt werden. Die erhaltenen Komponenten A und Komponenten B sind einzeln lagerstabil. Unmittelbar vor Applikation werden die Komponenten gemischt und der vernetzende Klebstoff erhalten. Die beiden Komponenten sollen so gemischt werden, dass ungefähr ein gleiches Äquivalentverhältnis von OH-Gruppen zu NCO-Gruppen enthalten ist. Bei der Vernetzung wird ein Netzwerk aufgebaut, wobei auch niedermolekulare Additive, die OH-Gruppen aufweisen, ggf. in das Netzwerk chemisch eingebaut werden können und dann nicht weiter migrieren.

In den 2K-PU-Klebstoffen können die bekannten Hilfsmittel und Additive zu der Komponente A oder zu der Komponente B gegeben werden, so lange diese nicht mit den Additiven reagieren. Es können Lösemittel enthalten sein, eine besondere Ausführungsform der Erfindung arbeitet jedoch lösemittelfrei. Dabei kann insbesondere durch die Auswahl der Komponente A und der Komponente B sichergestellt werden, dass bei Raumtemperatur wie 25°C eine niedrigviskose Mischung der Komponente A und B erhalten wird.

Da die Klebstoffe insbesondere zum Beschichten von großen Flächen geeignet sind, sollen sie bei Auftragstemperatur von ca. 20 bis 90°C eine niedrige Viskosität aufweisen. Die Viskosität der 2K-PU-Klebstoffe, gemessen unmittelbar nach dem Mischen der Bestandteile, soll zwischen 200 bis 5000 mPas bei Auftragstemperatur betragen, bevorzugt 500 bis 3000 mPas (bei 20 bis 60°C, Brookfield-Viskosimeter, gemäß EN ISO 2555).

Gemäß dem erfindungsgemäßen Verfahren wird ein geeigneter Klebstoff als Schicht auf ein Substrat aufgetragen. Der Klebstoff soll in einer Schichtdicke von 1 g/m² bis 100 g/m² aufgetragen werden, bevorzugt von 2 bis 35 g/m². Dabei soll eine niedrige Applikationsviskosität vorliegen. Um die Beschichtung zu erleichtern, ist es möglich, den 2K-PU-Klebstoff auf eine erhöhte Temperatur zu erwärmen, beispielsweise von 30 bis 60 °C. Unmittelbar nach dem Verkleben mit der zweiten Folienschicht kann der Verarbeitungsprozess weitergeführt werden. Dabei hat sich gezeigt, dass durch den schnellen Haftungsaufbau die Mehrschichtfolie bearbeitet und/oder konfektioniert werden kann. Die Haftung zwischen Foliensubstrat und Metallschicht ist sehr gut, ein Verrutschen findet nicht statt.

Durch das erfindungsgemäße Verfahren und die Verwendung einer geeigneten 2K-PU-Klebstoffs ist es möglich, die Verklebung von Mehrschichtfolien zu verbessern. Dabei wird insbesondere eine stabile Verklebung von Kunststoffsubstraten mit anderen flexiblen Substraten, die eine Metalloberfläche aufweisen, verbessert. Unmittelbar nach dem Verkleben entwickelt der Klebstoff schnell eine entsprechende Klebkraft. Damit ist sichergestellt, dass eine unmittelbare Weiterverarbeitung der Mehrschichtfolie möglich ist. Als Weiterverarbeitung kann eine Verklebung mit weiteren Folien vorgesehen sein, ein entsprechender Film kann bedruckt werden, oder es werden Konfektionierungsmaßnahmen durchgeführt.

### Beispiel 1:

Komponente A besteht aus einem handelsüblichen Polyesterprepolymer (Liofol UK 3640, Fa. Henkel), enthaltend einen Polyester aus aliphatische und aromatische Dicarbonsäuren sowie Polyalkylendiolen umgesetzt mit 4,4'-MDI im Überschuss, mit einem NCO-Gehalt des Prepolymeren von 2,25 %. Das PU-Prepolymer liegt gelöst in Ethylacetat vor; Festkörper 60%.
Viskosität: ca. 350 mPas (Brookfield, LVT) bei 20°C

Den 2-Komponenten Kaschierklebstoff erhält man durch Mischung des obigen PU-Prepolymers mit einem Härter auf Diethylenglykolbasis im Verhältnis 1,25:1.

Zu dem Klebstoff aus Beispiel 1 wird in der Komponente B 0,3 % eine der folgenden Substanzen zugegeben. Die Klebstoffe werden jeweils durch Mischen hergestellt.

Auf eine Polypropylenfolie (200 µm) auf die ein erfindungsgemäßer Klebstoff in einer Schichtdicke von 4 g/m² aufgetragen wurde, wird eine Aluminiumfolie aufkaschiert.

Die verklebten Folien wurden 10 Tage bei Raumtemperatur gelagert. Danach wurde eine Zugprüfung durchgeführt. Eine weitere Probe wurde entsprechend verklebt und anschließend einer Sterilisation bei 120°C, 2 bar, 30 min. unterzogen. Diese Proben wurden ebenfalls einem Zugtest unterworfen (DIN 53278, 90° Winkel).

| Haftvermittler | Zugtest (10 Tage) | Zugtest (Sterilisation) N/15 mm |
|---|---|---|
| Morin | 1,2 | 2,1 |
| Pyrogallol-Carbonsäure | 1,6 | 3,2 |
| Dihydroxyphenylessigsäure | 1,5 | 2,5 |
| Gallsäure | 1,4 | 2,8 |
| 4-Aminosalicylsäure | 1,7 | 2,4 |
| Zitronensäure | 1,3 | 1,9 |
| Aminopropyltriethoxysilan (Vergleich) | 1,1 | 1,2 |
| Vergleich ohne Haftvermittler | | 0,6 |

Die verklebten Folien mit Haftverbesserer zeigen nach Sterilisation eine gute oder verbesserte Haftung gegen eine nicht beanspruchte Probe. Weiterhin ist eine Verbesserung gegen einen bekannten Haftvermittler und gegen eine Probe ohne Additiv fest anzustellen.

## Patentansprüche

1. Verfahren zum Verkleben von Folienförmigen Substrate wobei auf eine Folie ein 2-Komponenten PolyurethanKlebstoff aufgebracht wird und danach eine zweite Folie aufgebracht wird, wobei ein 2K-PU-Klebstoff eingesetzt wird, bestehend aus
- einer Komponente A enthaltend mindestens ein Prepolymer mit mindestens zwei NCO-Gruppen,
- einer Komponente B enthaltend mindestens einen polymeren oder oligomeren Vernetzer, der mindestens zwei mit NCO-Gruppen reaktive Gruppen aufweist, **dadurch gekennzeichnet, dass** die Komponente B 0,05 bis 5 Gew-%, bezogen auf den gesamten Klebstoff, einer niedermolekularen Verbindung C mit einem Molekulargewicht von unter 500g/mol enthält, wobei diese
- eine nucleophile Gruppe aufweisen soll, die mit NCO-Gruppen reaktiv ist und
- eine H-Brücken bildende Gruppe enthält, ausgewählt aus O=C - O⁻ oder O=C -C- O⁻ oder O=C - C = C- O⁻ oder protonierten Formen.

2. Verfahren nach Anspruch 1, **dadurch gekennzeichnet, dass** die Verbindung C eine nucleophile Gruppe enthält, ausgewählt aus -OH, -NHR, -SH, -COOH, insbesondere eine OH-Gruppe oder eine COOH-Gruppe.

3. Verfahren nach Anspruch 1 oder 2, **dadurch gekennzeichnet, dass** Komponente A mindestens ein PU-Prepolymer auf Basis eines Umsetzungsprodukt eines Polyetherdiols oder Polyesterdiols umgesetzt mit einem stöchimetrischen Überschuss von aromatischen Diisocyanaten.

4. Verfahren nach einem der Ansprüche 1 bis 3, **dadurch gekennzeichnet, dass** die Komponente B einen Vernetzer mit OH- oder NH- Gruppen enthält, insbesondere Diole mit einem Molekulargewicht unter 3000 g/mol enthält.

5. Verfahren nach einem der Ansprüche 1 bis 4, **dadurch gekennzeichnet, dass** die Verbindung C mit Al-Oberflächen einen Komplex bildet.

6. Verfahren nach einem der Ansprüche 1 bis 5, **dadurch gekennzeichnet, dass** Verbindung C ein aromatisches Grundgerüst aufweist und insbesondere eine phenolische OH-Gruppe enthält.

7. Verfahren nach einem der Ansprüche 1 bis 6, **dadurch gekennzeichnet, dass** Verbindung C von 0,1 bis 2 Gew-% enthalten ist.

8. Verfahren nach einem der Ansprüche 1 bis 7, **dadurch gekennzeichnet, dass** eine erste Folie eine Metalloberfläche aufweist, auf diese Folie ein Klebstoff nach einem der Ansprüche 1 bis 7 aufgetragen wird, danach die so beschichtete Folie mir einem weiteren folienförmigen Substrat verklebt wird.

9. Verfahren nach einem der Ansprüche 1 bis 8, **dadurch gekennzeichnet, dass** der Klebstoff in einer Menge von 1 bis 100 g/m² aufgetragen wird.

10. Verfahren nach einem der Ansprüche 1 bis 9, **dadurch gekennzeichnet, dass** der Klebstoff eine Viskosität von 200 bis 5000 mPas aufweist (20 bis 60°C, EN ISO 2555).

11. Verfahren nach Anspruch 10, **dadurch gekennzeichnet, dass** der Klebstoff bei einer Temperatur von 25 bis 75°C aufgetragen wird.

12. Verfahren nach einem der Ansprüche 1 bis 11, **dadurch gekennzeichnet, dass** die nucleophile Gruppen aus C langsamer mit den NCO-Gruppen reagieren als die reaktiven Gruppen der Komponente B.

13. Mehrschichtfolie hergestellt nach einem Verfahren gemäß Anspruch 1 bis 12, wobei mindestens eine Folie mit einer metallisierten Oberfläche enthalten ist.

14. Mehrschichtfolie nach Anspruch 13, **dadurch gekennzeichnet, dass** die metallisierte Oberfläche aus Aluminium besteht.

15. Mehrschichtfolie nach Anspruch 13 oder 14, **dadurch gekennzeichnet, dass** die Klebstoffschicht eine Schichtstärke von weniger als 100 g/m² aufweist.

## Claims

1. A method for adhesively bonding film-like substrates, in which a two-component polyurethane adhesive is applied to a film and then a second film is applied, a two-component polyurethane adhesive being used that consists of
- a component A containing at least one prepolymer having at least two NCO groups,
- a component B containing at least one polymeric or oligomeric crosslinker having at least two groups that react with NCO groups, **characterised in that** component B contains 0.05 to 5 wt.%, relative to the total adhesive, of a low-molecular-weight compound C with a molecular weight of less than 500 g/mol, which
- should have a nucleophilic group that reacts with NCO groups and
- contains a hydrogen-bridging group, selected from O=C-O⁻ or O=C-C-O⁻ or O=C-C = C-O⁻ or protonated forms.

2. The method according to claim 1, **characterised in that** compound C contains a nucleophilic group selected from -OH, -NHR, -SH, -COOH, in particular an OH group or a COOH group.

3. The method according to claim 1 or 2, **characterised in that** component A contains at least one PU prepolymer based on a reaction product of a polyether diol or polyester diol reacted with a stoichiometric excess of aromatic diisocyanates.

4. The method according to one of claims 1 to 3, **characterised in that** component B contains a crosslinker having OH or NH groups, in particular diols with a molecular weight of less than 3000 g/mol.

5. The method according to one of claims 1 to 4, **characterised in that** compound C forms a complex with Al surfaces.

6. The method according to one of claims 1 to 5, **characterised in that** compound C has an aromatic backbone and in particular contains a phenolic OH group.

7. The method according to one of claims 1 to 6, **characterised in that** compound C is included in an amount from 0.1 to 2 wt.%.

8. The method according to one of claims 1 to 7, **characterised in that** a first film has a metallic surface, an adhesive according to one of claims 1 to 7 is applied to said film, then the film coated in this way is adhesively bonded to a further film-like substrate.

9. The method according to one of claims 1 to 8, **characterised in that** the adhesive is applied in an amount from 1 to 100 g/m².

10. The method according to one of claims 1 to 9, **characterised in that** the adhesive has a viscosity of 200 to 5000 mPas (20 to 60°C, EN ISO 2555).

11. The method according to claim 10, **characterised in that** the adhesive is applied at a temperature of 25 to 75°C.

12. The method according to one of claims 1 to 11, **characterised in that** the nucleophilic groups from C react more slowly with the NCO groups than the reactive groups of component B.

13. A multilayer film produced by a method according to claim 1 to 12, at least one film with a metallised surface being included.

14. The multilayer film according to claim 13, **characterised in that** the metallised surface consists of aluminium.

15. The multilayer film according to claim 13 or 14, **characterised in that** the adhesive layer has a film thickness of less than 100 g/m².

## Revendications

1. Procédé pour coller des substrats en forme de feuilles, dans lequel on applique sur une feuille, un adhésif de polyuréthane à deux composants et on applique ensuite une deuxième feuille, dans lequel on met en oeuvre un adhésif de polyuréthane à deux composants constitué par :
- un composant A contenant au moins un prépolymère comprenant au moins deux groupes NCO ;
- un composant B contenant au moins un agent de réticulation polymère ou oligomère qui présente au moins deux groupes aptes à réagir avec des groupes NCO,
**caractérisé en ce que** le composant B contient de 0,05 à 5 % en poids, rapportés à l'adhésif dans sa totalité, d'un composé C à bas poids moléculaire dont le poids moléculaire est inférieur à 500 g/mol, celui-ci
- devant présenter un groupe nucléophile qui est à même de réagir avec des groupes NCO ; et
- contenant un groupe formant des ponts hydrogène, choisi parmi un groupe O=O-O⁻ ou un groupe O=C-C-O⁻ ou un groupe O=C-C = C-O⁻ ou des formes protonées.

2. Procédé selon la revendication 1, **caractérisé en ce que** le composé C contient un groupe nucléophile choisi parmi un groupe -OH, un groupe -NHR, un groupe -SH, un groupe -COOH, en particulier un groupe -OH ou un groupe - COOH.

3. Procédé selon la revendication 1 ou 2, **caractérisé en ce que** le composant A contient au moins un prépolymère de polyuréthane à base d'un produit réactionnel d'un polyétherdiol ou d'un polyesterdiol mis à réagir avec un excès stoechiométrique de diisocyanates aromatiques.

4. Procédé selon l'une quelconque des revendications 1 à 3, **caractérisé en ce que** le composant B contient un agent de réticulation comprenant des groupes OH ou NH, en particulier des diols dont le poids moléculaire est inférieur à 3000 g/mol.

5. Procédé selon l'une quelconque des revendications 1 à 4, **caractérisé en ce que** le composé C forme un complexe avec des surfaces en aluminium.

6. Procédé selon l'une quelconque des revendications 1 à 5, **caractérisé en ce que** le composé C présente un squelette aromatique et contient en particulier un groupe OH phénolique.

7. Procédé selon l'une quelconque des revendications 1 à 6, **caractérisé en ce que** le composé C est contenu à concurrence de 0,1 à 2 % en poids.

8. Procédé selon l'une quelconque des revendications 1 à 7, **caractérisé en ce qu'**une première feuille présente une surface métallique, un adhésif selon l'une quelconque des revendications 1 à 7 étant appliqué sur cette feuille et la feuille ainsi enduite étant ensuite collée à un autre substrat en forme de feuille.

9. Procédé selon l'une quelconque des revendications 1 à 8, **caractérisé en ce que** l'adhésif est appliqué en une quantité de 1 à 100 g/m².

10. Procédé selon l'une quelconque des revendications 1 à 9, **caractérisé en ce que** l'adhésif présente une viscosité de 200 à 5000 mPas (20 à 60 °C, EN ISO 2555).

11. Procédé selon la revendication 10, **caractérisé en ce que** l'adhésif est appliqué à une température de 25 à 75 °C.

12. Procédé selon l'une quelconque des revendications 1 à 11, **caractérisé en ce que** les groupes nucléophiles de C réagissent plus lentement avec les groupes NCO que les groupes réactifs du composant B.

13. Feuille multicouche fabriquée conformément à un procédé selon les revendications 1 à 12, contenant au moins une feuille possédant une surface métallisée.

14. Feuille multicouche selon la revendication 13, **caractérisée en ce que** la surface métallisée est constituée d'aluminium.

15. Feuille multicouche selon la revendication 13 ou 14, **caractérisée en ce que** la couche d'adhésif présente une épaisseur de couche inférieure à 100 g/m².
